# EUROPÄISCHE PATENTANMELDUNG

(11) **EP 0 773 693 A2**
(43) Veröffentlichungstag der Anmeldung: **14.05.1997**
(21) Anmeldenummer: 96440095.6
(22) Anmeldetag: 06.11.1996
(51) Int. Cl.: H04Q 7/22

(54) **Netzanpassungszentrale für ein Mobilfunknetz**

(30) Priorität: 07.11.1995 DE 19541398
(71) Anmelder: ALCATEL ALSTHOM COMPAGNIE GENERALE D'ELECTRICITE, 75008 Paris (FR)
(72) Erfinder: Jacobsohn, Dieter, 71711 Murr (DE)
(74) Vertreter: Knecht, Ulrich Karl, Dipl.-Ing.

(57) **Zusammenfassung**

Um bei Datenübertragungen zwischen einem Mobilfunknetz und einem Telekommunikationsnetz die Datensignale an die in diesen Netzen verwendeten Protokolle und Schrittgeschwindigkeiten anzupassen, werden Anpassungsmittel, sogenannte "Inter Working Functions" eingesetzt, die entweder in jeder Mobilfunkstelle des Mobilfunknetzes implementiert werden, oder die in einer Netzanpassungszentrale implementiert werden, die mit mehreren Mobilfunkvermittlungsstellen verbunden ist.

Zum einfachen Aufbau eines Mobilfunknetzes wird eine Netzanpassungszentrale (CIWF) vorgeschlagenm, die verschiedene Adaptionsmittel (IWF1, ... IWFn) enthält zur Anpassung von Datenübertragungen zwischen den mehreren Mobilfunkvermittlungsstellen (MSC) und verschiedenen Datenübertragungsknoten (MOD, PH, PAD, ISDN) eines Telekommunikationsnetzes (PSTN) und die ein gesteuertes Koppelfeld (SWT) enthält, das die verschiedenen Adaptionsmittel wahlfrei mit den Mobilfunkvermittlungsstellen verbindet.

Dadurch wird zentral im Mobilfunknetz eine Einrichtung bereitgestellt, bei der jede der Mobilfunkvermittlungsstellen Zugriff auf jede der verschiedenen Adaptionsmittel hat. Es müssen somit nicht alle Adaptionsmittel mehrfach installiert werden, sondern nur soviele, wie es bei einer mittleren Auslastung der verfügbaren Datendienste erforderlich ist.

## Beschreibung

Die Erfindung betrifft eine Netzanpassungszentrale nach dem Oberbegriff des Anspruch 1 sowie ein damit ausgestattetes Mobilfunknetz.

Aus dem von M. Mouly und M.-B. Pautet, im Eigenverlag, 49 rue Louise Bruneau, 91120 Palaiseau, Frankreich, 1992 herausgegebenen Buch "The GSM", Seiten 102 und Seiten 149-154 sind Anpassungsmittel für das GSM-Mobilfunknetz (Global System for Mobile Communications) bekannt. Die dort beschriebenen Anpassungsmittel führen sogenannte "Inter Working Functions" aus, um bei Datenübertragungen zwischen dem Mobilfunknetz und einem Telekommunikationsnetz die Datensignale an die in diesen Netzen verwendeten Protokolle und Übertragungsraten anzupassen. Demnach dienen die die "Inter Working Functions" ausführenden Adaptionsmitteln zur gegenseitigen Anpassung verschiedener Datenübertragungen. In dem Buch "The GSM" wird auf Seite 149, dritter Absatz beschrieben, daß diese "Inter Working Functions" z. B. in einer jeden Mobilfunkstelle implementiert werden können. Weiterhin wird dort beschrieben, daß die "inter Working Functions" in eine Netzanpassungszentrale implementiert werden können, die mit mehreren Mobilfunkvermittlungsstellen verbunden ist. Wie diese dort als "centralised approach" bezeichnete Struktur des Mobilfunknetzes aufgebaut sein soll, wird dort nicht beschrieben.

Weiterhin sind aus dem Artikel "Datenübertragung in digitalen Mobilfunknetzen" von R. Hinz, erschienen auf Seiten 37-40 in der Zeitschrift "telekom praxis", Band 72, August 1995, Fachverlag Schiele und Schön, Berlin, auch diese als "Interworking Functions" bezeichneten Anpassungsmittel bekannt. Dort sind zwar verschiedene Anpassungsmittel beschrieben, eine Integration dieser in eine Netzanpassungszentrale ist dort jedoch nicht beschrieben.

Aufgabe der Erfindung ist es eine Netzanpassungszentrale für einen einfachen Aufbau eines Mobilfunknetzes mit der oben genannten Struktur anzugeben.

Gelöst wird die Aufgabe durch eine Netzanpassungszentrale mit den Merkmalen des Anspruchs 1 und durch ein damit ausgestattetes Mobilfunknetz nach dem nebengeordneten Anspruch.

Demnach ist die Netzanpassungszentrale an mehrere Mobilfunkvermittlungsstellen des Mobilfunknetzes angeschlossen, die Datenübertragungsverbindungen zwischen dem Mobilfunknetz und einem Telekommunikationsnetz herstellen. Die Netzanpassungszentrale enthält verschiedene Anpassungsmittel zum Anpassen des Mobilfunknetzes an verschiedene Datenübertragungsknoten des Telekommunikationsnetz sowie ein Koppelfeld und mindestens eine damit verbundene Steuerung, mittels denen jedes der Anpassungsmittel mit jeder der Mobilfunkvermittlungsstellen verbindbar ist, um wahlfrei einzelne der Anpassungsmittel in einzelne der Datenübertragungsverbindungen zu schalten.

Somit enthält die Netzanpassungszentrale verschiedene Adaptionsmittel zur Anpassung von Datenübertragungen zwischen mehreren Mobilfunkvermittlungsstellen eines Mobilfunknetzes und verschiedenen Datenübertragungsknoten eines Telekommunikationsnetzes sowie ein gesteuertes Koppelfeld, das die verschiedenen Adaptionsmittel wahlfrei mit den Mobilfunkvermittlungsstellen verbindet.

Dadurch wird zentral im Mobilfunknetz eine Einrichtung bereitgestellt, bei der jede der Mobilfunkvermittlungsstellen Zugriff auf jede der verschiedenen Adaptionsmittel hat. Es müssen somit nicht alle Adaptionsmittel mehrfach, d. h. separat in jeder Mobilfunkvermittlungsstelle, installiert werden. In der Netzanpassungszentrale brauchen nur soviele Adaptionsmittel bereitgestellt werden, wie es bei einer mittleren Auslastung der verfügbaren Datendienste erforderlich ist. Die erfindungsgemäße Netzanpassungszentrale ist sehr preiswert und einfach aufzubauen, indem beispielsweise auf die Baugruppen einer Vermittlungseinrichtung zurückgegriffen wird, die bereits ein Koppelfeld umfassen.

Weitere Ausgestaltungen der Erfindung sind den Unteransprüchen zu entnehmen.

Im folgenden wird die Erfindung anhand eines Ausführungsbeispiels und unter Zuhilfenahme zweier Figuren beschrieben, von denen:
- Fig. 1: schematisch den Aufbau eines Mobilfunknetzes mit einer zentralen Datenübertragungseinrichtung zeigt und
- Fig. 2: das Blockschaltbild der zentralen Datenübertragungseinrichtung zeigt.

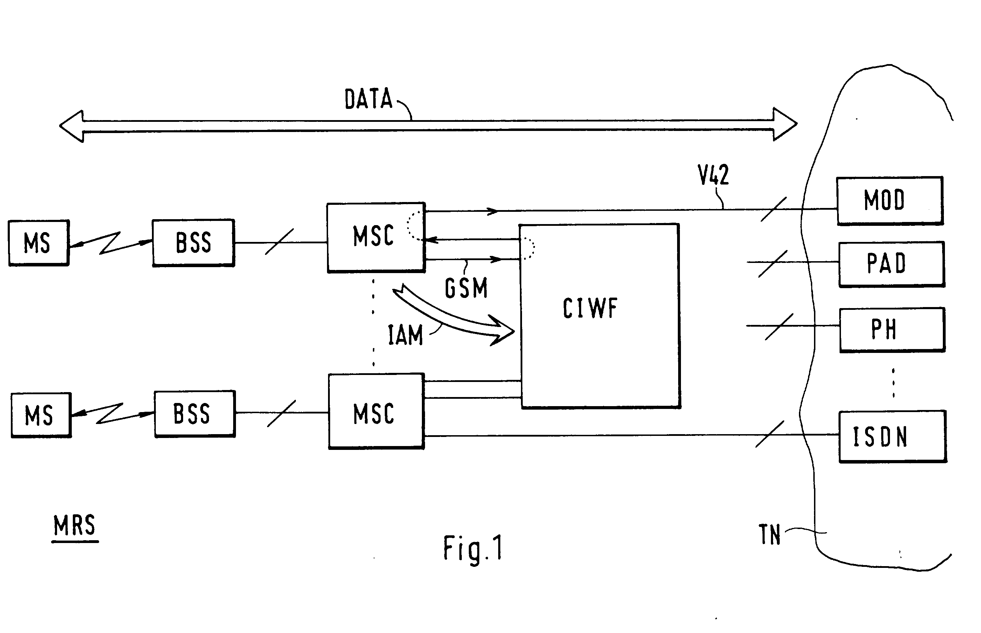

Figur 1 zeigt schematisch den Aufbau eines Mobilfunknetzes MRS mit einer Netzanpassungszentrale CIWF und mit mehreren damit verbundenen Mobilfunkvermittlungsstellen MSC, die Datenübertragungsverbindungen DATA zu einem Telekommunikationsnetz TN herstellen. Das Mobilfunknetz enthält weiterhin mehrere an die Mobilfunkvermittlungsstellen MSC angeschlossene Basisstationssubsysteme BSS. Die Basisstationssubsysteme umfassen nicht dargestellte Basisstationssteuerungen mit daran angeschlossenen Funkfeststationen. Jedes Basisstationssubsystem BSS versorgt einen Teilbereich des Mobilfunknetzes MRS, ein sogenanntes Funkzellencluster. Mobilfunkstationen MS, die sich in dem Mobilfunknetz bewegen, sind drahtlos mit den Funkfeststationen der Basisstationssubsysteme BSS verbunden.

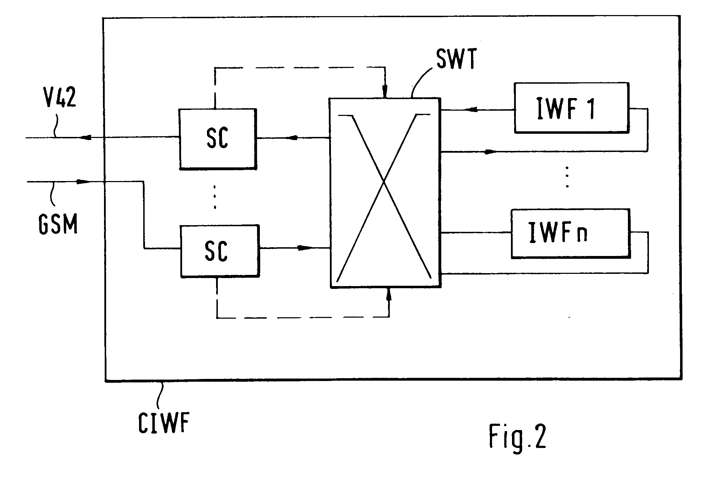

Um nun eine Datenübertragung zwischen einer solchen Mobilstation MS und einem Teilnehmergerät des Telekommunikationsnetzes TN durchzuführen, wird eine Datenübertragungsverbindung, im weiteren auch kurz Verbindung DATA genannt, von der Mobilstation MS über die Mobilfunkvermittlungsstelle MSC zu einem Datenübertragungsknoten des Telekommunikationsnetzes hergestellt. Unter Datenübertragungsknoten wird hier auch ein mit einem Modem ausgestatteter Teilnehmeranschluß verstanden. In Fig. 1 sind beispielhaft vier verschiedene Datenübertragungsknoten dargestellt, von denen ein erster MOD ein Modem für einen Personalcomputer darstellt, ein zweiter PAD einen sogenannten "packet assembler/disassembler" nach V.24-Standard darstellt, ein dritter PH einen sogenannten "packet handler" nach X.25-Standard darstellt und ein vierter ISDN einen Datenübertragungsknoten zum Zugang in das ISDN-Netz darstellt. Will beispielsweise ein Mobilfunkteilnehmer über seine Mobilstation MS eine Nachricht EMAIL mittels des Datenübertragungsdienstes "elektronischer Brief (E-Mail)" an einen Teilnehmer des Telekommunikationsnetzes TN senden, so wird hier eine Datenübertragungsverbindung zum Modem MOD und den damit verbundenen Personalcomputer des Teilnehmers hergestellt. In dem Beispiel nach Fig. 1 ist das Mobilfunknetz ein nach dem GSM-Standard ausgeführtes zellulares Mobilfunknetz. Demnach wird die in dem Mobilfunknetz vorgegebene Datenübertragung nach einem GSM-Protokoll, dem sogenannten Radio Link Protocol, durchgeführt und von einem der Anpassungsmittel an eine Datenübertragung angepaßt, die vom CCITT-Standard V.42 vorgegeben ist. Diese verschiedenen Protokolle dienen der Fehlerkorrektur sowie der Datensicherung und sind in Fig. 1 mit GSM und V.42 bezeichnet. Die Anpassung der Datenübertragung sowie der Verbindungsaufbau und -abbau wird im weiteren anhand der Fig. 2 beschrieben.

In Fig. 2 ist die Netzanpassungszentrale CIWF schematisch dargestellt. Diese enthält verschiedene Adaptionsmittel IWF1 bis IWFn. In diesem Beispiel sei für jeden der vier Datenübertragungsknoten ein Adaptionsmittel vorhanden. Jedoch sind hier vereinfachend nur folgende zwei Adaptionsmittel dargestellt: Ein erstes Adaptionsmittel IWF1 für eine Verbindung mit dem Modem MOD und ein zweites Adaptionsmittel IWFn für eine Verbindung mit dem Datenübertragungsknoten ISDN. Die Netzanpassungszentrale CIWF enthält weiterhin ein mit den Adaptionsmitteln verbundenes Koppelfeld SWT und damit verbundene Steuerungen CC, die das Koppelfeld SWT so steuern, daß wahlfreie Verbindungen zwischen den Mobilfunkvermittlungsstellen und den Adaptionsmitteln hergestellt werden können. Dadurch ist eine Verbindung zwischen jeder Mobilfunkvermittlungsstelle und jedem Datenübertragungsknoten möglich, wobei die Datenübertragung zwischen dem Mobilfunknetz und dem Telekommunikationsnetz durch das entsprechende Adaptionsmittel an die Erfordernisse des Datenübertragungsknotens angepaßt wird. Auf die grundlegende Funktionsweise der verschiedenen Adaptionsmittel wird hier nicht näher eingegangen, sondern auf den eingangs genannten Artikel von R. Hinz verwiesen.

Zur Durchführung des zuvor genannten Datendienstes "E-MAIL" wird die Datenübertragung von der Mobilstation über das entsprechende Basisstationssubsystem BSS und die damit verbundene Mobilfunkvermittlungsstelle MSC auf die Netzanpassungszentrale CIWF geführt. Die Signalisierungsinformation IAM, die diese Mobilfunkvermittlungsstelle MSC gemäß dem Protokoll GSM an die Netzanpassungszentrale CIWF sendet, wird innerhalb einer der Steuerungen CC ausgewertet, die das Koppelfeld so steuert, daß die Datenübertragung auf das Adaptionsmittel IWF1 geführt wird. Dieses Adaptionsmittel paßt die nach dem Protokoll GSM geformten Datensignale an das für das Modem MOD erforderliche Protokoll V42 an.

Jedes der Adaptionsmittel IWF1 bis IWFn besteht aus einer prozessorgesteuerten Schaltung, die jeweils eine der zuvor genannten "Inter Working Functions" ausführt. In diesem Beispiel wertet das erste Adaptionsmittel IWF1 die vom Mobilfunknetz kommenden Datensignale aus, konvertiert die Schrittgeschwindigkeit von 9600 Bit/s auf 14400 Bit/s und moduliert die Datensignale, die vom Mobilfunknetz kommen. Die vom Telekommunikationsnetz TN kommenden Datensignale werden in umgekehrter Reihenfolge demoduliert und an die kleinere Schrittgeschwindigkeit angepaßt. Demnach arbeitet das Adaptionsmittel bidirektional und umfaßt eine Modemfunktion, um die im Mobilfunknetz übertragenen digitalen Datensignale in analoge Akkustiksignale zur Übertragung im Telekommunikationsnetz umzusetzen.

Durch das oben beschriebene Koppelfeld SWT und die damit verbundenen Steuerungen CC können wahlfreie Verbindungen geschaltet werden, so daß jede Mobilfunkvermittlungsstelle MSC und damit jede Mobilstation MS des Mobilfunknetzes Zugriff auf jedes Adaptionsmittel IWF1 bis IWFn hat. Da im zeitlichen Mittel nur eine begrenzte Anzahl der Teilnehmer (etwa 10%) gleichzeitig einen Datenübertragungsdienst in Anspruch nehmen, muß innerhalb der zentralen Datenübertragungseinrichtung CIWF nur eine begrenzte Anzahl an Adaptionsmitteln zur Verfügung gestellt werden. Somit ist ein kostengünstiger Aufbau des Mobilfunknetzes möglich. Weiterhin kann bei dem Aufbau der Netzanpassungszentrale auf Baugruppen zurückgegriffen werden, die bereits für eine herkömmliche Vermittlungsstelle, wie etwa dem "System 12" von Alcatel, entwickelt worden sind und die bereits ein Koppelfeld und die benötigten Steuerungen enthalten.

Es können sowohl mehrere Steuerungen für eine dezentrale Steuerung des Koppelfeldes als auch eine einzige Steuerung für eine zentrale Steuerung eingesetzt werden.

Eine Datenübertragungsverbindung kann nicht nur, wie oben beschrieben, zunächst zu den Funkvermittlungsstellen zurückgeschleift werden, bevor sie zum Telekommunikationsnetz geführt wird. Es ist auch denkbar die Datenübertragung von den Mobilfunkstellen zu der Netzanpassungszentrale und von dort direkt zum Telekommunikationsnetz zu führen. Weiterhin ist eine Integration der Netzanpassungszentrale in eine der Mobilfunkvermittlungsstellen denkbar.

Das oben beschriebene Beispiel ist nur eine Ausführungsform der Erfindung, bei der ein Mobilfunknetz an ein Telekommunikationsnetz angepaßt wird. Die beschriebenen Adaptionsmittel dienen dabei der Anpassung einer GSM-Datenübertragung an eine Festnetz-Datenübertragung im Rahmen des Datenübertragungsdienstes "E-Mail". Es sind jedoch zahlreiche andere Beispiele denkbar, wie etwa die Anpassung an Datenübertragungsknoten für Faxdienste, duale Sprach- und Datendienste oder sogenannte HSCD-Datendienste (HSCD: High Switched Data). Weiterhin sind auch Anwendungen der Erfindung denkbar, bei den verschiedene Mobilfunknetze, insbesondere zellulare Mobilfunknetze verschiedener Standards, aneinander angepaßt werden.

## Patentansprüche

1. Netzanpassungszentrale (CIWF) für ein Mobilfunknetz (MRS), die verschiedene Anpassungsmittel (IWF1 bis IWFn) enthält zum Anpassen des Mobilfunknetzes (MRS) an verschiedene Datenübertragungsknoten (MOD, PAD, PH, ISDN) eines Telekommunikationsnetzes (TN) und die an mehrere Mobilfunkvermittlungsstellen (MSC) angeschlossen ist, die Datenübertragungsverbindungen (DATA) zwischen dem Mobilfunknetz (MRS) und dem Telekommunikationsnetz (TN) herstellen,
**gekennzeichnet durch** ein Koppelfeld (SWT) und durch mindestens eine damit verbundene Steuerung (SC), mittels denen jedes der Anpassungsmittel (IWF1 bis IWFn) mit jeder der Mobilfunkvermittlungsstellen (MSC) verbindbar ist, um wahlfrei einzelne der Anpassungsmittel (IWF1) in einzelne der Datenübertragungsverbindungen (DATA) zu schalten.

2. Netzanpassungszentrale (CIWF) nach Anspruch 1,
dadurch gekennzeichnet, daß zumindest eines der verschiedenen Anpassungsmittel (IWF1) eine Schrittgeschwindigkeit, die auf einem Datenübertragungskanal des Mobilfunknetzes (MRS) verfügbar ist, an eine Schrittgeschwindigkeit anpaßt, die auf einem Datenübertragungskanal des Telekommunikationsnetzes (TN) verfügbar ist.

3. Netzanpassungszentrale (CIWF) nach Anspruch 1,
dadurch gekennzeichnet, daß zumindest eines der verschiedenen Anpassungsmittel (IWF1) ein Datenübertragungsprotokoll (GSM), das in dem Mobilfunknetz (MRS) verwendbar ist, an ein Datenübertragungsprotokoll (V42) anpaßt, das in dem Telekommunikationsnetz (TN) verwendbar ist.

4. Netzanpassungszentrale (CIWF) nach Anspruch 2 und 3,
dadurch gekennzeichnet, daß das zumindest eine Anpassungsmittel (IWF1) Datensignale, die zwischen dem Mobilfunknetz (MRS) und dem Telekommunikationsnetz (TN) zu übertragen sind, an die zur Durchführung eines Datenübertragungsdienstes vorgegebenen verschiedenen Datenübertragungsprotokolle (GSM, V42) und Schrittgeschwindigkeiten anpasst.

5. Netzanpassungszentrale (CIWF) nach Anspruch 1,
dadurch gekennzeichnet, daß die mindestens eine Steuerung (SC), die mit dem Koppelfeld (SWT) verbunden ist, zum Aufbau und zum Abbau einer wahlfreien Verbindung zwischen einer der Mobilfunkvermittlungsstellen (MSC) und einer der verschiedenen Anpassungsmittel (IWF1) eine von dieser Mobilfunkvermittlungsstelle (MSC) gesendete Signalisierung (IAM) empfängt und auswertet.

6. Netzanpassungszentrale nach Anspruch 1,
dadurch gekennzeichnet, daß zumindest eines der Anpassungsmittel (IWF1) ein Modem umfaßt.

7. Netzanpassungszentrale nach Anspruch 1,
dadurch gekennzeichnet, daß die Netzanpassungszentrale in eine der Mobilfunkvermittlungsstellen integriert ist.
